# EUROPÄISCHE PATENTSCHRIFT

(11) **EP 1 910 702 B1**
(45) Veröffentlichungstag und Bekanntmachung des Hinweises auf die Patenterteilung: **11.03.2009**
(21) Anmeldenummer: 06762802.4
(22) Anmeldetag: 25.07.2006
(51) Int. Cl.: F16D 65/06, F16D 65/092

(54) **SCHIENENFAHRZEUGBREMSVORRICHTUNG MIT SELBST STABILISIERENDEN BREMSBELÄGEN**
RAILWAY VEHICLE BRAKING DEVICE COMPRISING SELF-STABILIZING BRAKE LININGS
DISPOSITIF DE FREINAGE DE VEHICULE FERROVIAIRE A GARNITURES DE FREIN AUTOSTABILISEES

(30) Priorität: 26.07.2005 DE 102005034861
(43) Veröffentlichungstag der Anmeldung: 16.04.2008
(73) Patentinhaber: KNORR-BREMSE Systeme für Schienenfahrzeuge GmbH, 80809 München (DE)
(72) Erfinder: ELSTORPFF, Marc-Gregory, 80638 München (DE); MATHIEU, Michael, 82178 Puchheim (DE); STALTMEIR, Josef, 80807 München (DE); WIRTH, Xaver, 85737 Ismaning (DE)
(74) Vertreter: Mattusch, Gundula
(86) Internationale Anmeldenummer: PCT/EP2006/007311
(87) Internationale Veröffentlichungsnummer: WO 2007/012458

(56) Entgegenhaltungen:
- WO-A-02/02961
- DE-A1- 4 210 828
- DE-A1- 10 258 750
- DE-B- 1 238 284
- US-A- 2 933 164
- US-A- 2 974 759
- US-A- 4 220 223
- US-B1- 6 241 058

## Beschreibung

Die Erfindung geht aus von einer Schienenfahrzeugbremsvorrichtung gemäß dem Oberbegriff von Anspruch 1.

Eine Schienenfahrzeugbremsvorrichtung ist in der DE 195 08 034 A1 offenbart. Um eine maximale Standzeit von Bremsklötzen und Bremsbelägen zu erreichen, muss das zur Verfügung stehende Verschleißvolumen möglichst gleichmäßig genutzt werden. Dazu ist es wichtig, dass der Reibbelag nicht im Laufe des Verschleißhubes eine Schräglage einnimmt, durch welche die nutzbare Verschleißdicke reduziert wird.

Bei Schienenfahrzeugen können die Radsätze gegenüber den Drehgestellen in der Regel seitliche Verlagerungen ausführen. Darüber hinaus ist auch eine begrenzte Höhenverlagerung der Radsätze gegenüber den Drehgestellen, welche die Radbremsen, beispielsweise Klotzbremsen tragen, möglich. Eine kippbare Lagerung von Bremsbelaghaltern, Bremsklotzhaltern oder Bremsklotzschuhen ist dann notwendig, damit die Bremsbeläge oder Bremsklötze den zugeordneten Bremsflächen an den Rädern der Radsätze trotz seitlicher und/oder Höhenverlagerung der Achsen gegenüberliegen können. Dies hat jedoch den Nachteil, dass die Bremsbeläge oder Bremsklötze gegenüber der zugeordneten Bremsfläche eine Schräglage einnehmen und sich demzufolge auch schräg abnutzen können. Maßgebend für den Schrägverschleiß ist die Lage des sog. Verschleißmittelpunkts an der Reibfläche des Bremsbelags bzw. des Bremsklotzes, an welchem die Bremskraft F_{Brems} fiktiv angreift und welche aufgrund eines komplexen Verfahrens rechnerisch bestimmt werden kann.

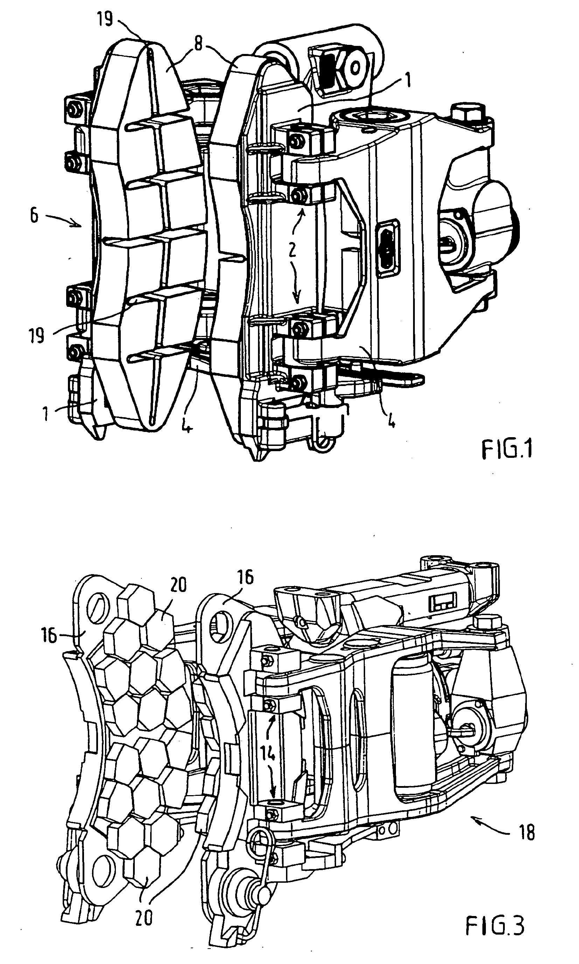

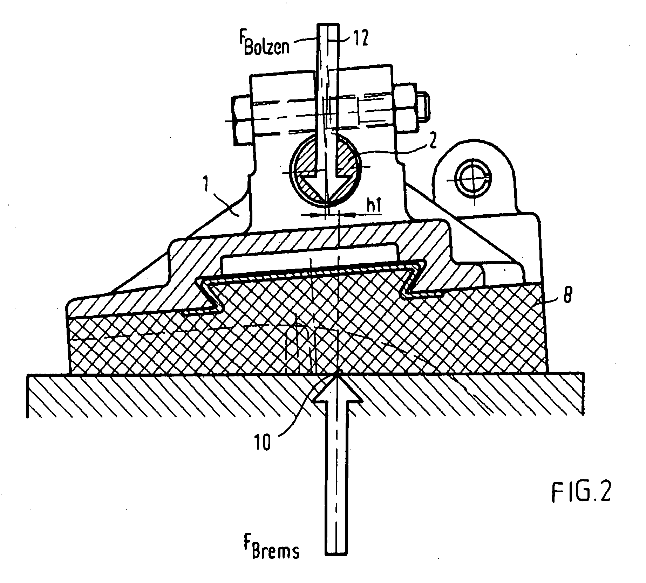

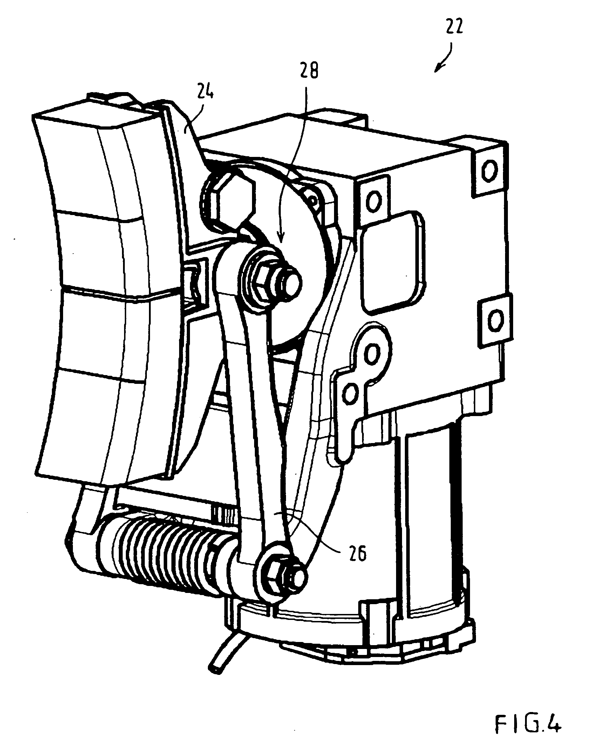

Als Beispiel für eine solche Problematik ist in Fig.1 eine übliche Aufhängung von Bremsbelaghaltern 1 durch Bolzenverbindungen 2 an Bremszangenhebeln 4 einer Kompaktbremszange 6 gezeigt, welche mit einer nicht gezeigten achsfesten Bremsscheibe zusammenwirkt. Bedingt durch die kippbare Lagerung der Bremsbelaghalter 1 wandert durch einen geringen Schrägverschleiß der Bremsbeläge 8 der Verschleißmittelpunkt 10 um eine Wegstrecke h1 gegenüber der Kraftwirklinie 12 der an der Bolzenverbindung 2 wirkenden Bolzenkraft F_{Bolzen} als Reaktionskraft seitlich aus, so dass ein Drehmoment auf den Bremsbelag 8 entsteht, das einen über der Verschleißdauer zunehmenden Schrägverschleiß zur Folge hat, wie anhand von Fig.2 leicht vorstellbar ist. Dies bedingt im Sinne eines instabilen Verhaltens eine Selbstverstärkung des Schrägverschleißes, indem dieser größer wird, je weiter er fortgeschritten ist. Anstatt an einem einzigen Bremsbelag 8 kann auch an mehreren, an einem durch eine Bolzenverbindung 14 kippbar gelagerten Bremsbelaghalter 16 einer Kompaktbremszange 18 gehaltenen Bremsbelägen 20, welche gemäß Fig.3 beispielsweise einen sechseckigen Querschnitt aufweise, Schrägverschleiß auftreten. Das gleiche Problem stellt sich bei Klotzbremsen 22, wobei in Fig.4 ein Bremsklotzhalter 24 dargestellt ist, welcher gegenüber Bremshebeln 26 und einer Kolbenstange durch eine Bolzenverbindung 28 gelagert schwenkbar gelagert ist.

Die eingangs erwähnten, sich von einer zum Reibpartner gewandten Reibfläche in das Innere des Verschleißvolumens erstreckende Ausnehmungen, meist in Form von längs und quer verlaufenden Schlitzen 19 (siehe Fig.1) dienen zum einen dazu, Wasser auf den Reibflächen nach außen abzuleiten, damit sich bei feuchter Umgebung kein hydrodynamischen Schmierfilm auf den Reibflächen ausbildet und der Gleitreibwert reduziert wird. Weiterhin verhindern diese Schlitze 19 eine Aufbiegung des Bremsbelags, wenn sich dieser entlang seiner Dicke ungleichmäßig erwärmt und es dadurch zu ungleichmäßigen Wärmeausdehnungen kommt.

Um dem Schrägverschleiß entgegenzuwirken sind mehrere technische Lösungen bekannt: Eine Möglichkeit, die vor allem bei konventionellen Bremszangen Anwendung findet, ist die Verwendung einer breiten Hängelasche, die einem Schrägverschleiß der Beläge entgegenwirkt. Eine andere Möglichkeit, die bei Kompaktbremszangen angewendet wird, sind Parallellenker, wie sie in der DE 195 08 034 A1 beschrieben sind. Bei beiden Lösungen ist zu beachten, dass der Radsatz eines Schienenfahrzeuges üblicherweise eine gewisse radiale Einstellbarkeit bei Kurvenfahrten aufweist, während die Bremszange drehgestellfest montiert ist. Um bei radial eingestelltem Radsatz und relativ zum Drehgestellrahmen parallel geführten Bremsbelägen während des Bremsvorgangs keine unzulässig hohen Kantenpressungen des Bremsbelages zu erhalten, muss die Parallelführung eine gewisse Elastizität aufweisen. Diese üblichen Parallelführungen stellen also einen Kompromiss zwischen exakter Parallelführung und Nachgiebigkeit bei Kurvenfahrten dar. Außerdem stellt eine zusätzlich erforderliche Parallelführung einen Kostenfaktor dar.

Andererseits ist der Verschleiß von Bremsklötzen und Bremsbelägen von weiteren Parametern abhängig, zum Beispiel von der Flächenpressung, der Gleitgeschwindigkeit, der Rauheit der Gleitflächen, der Ebenheit der Gleitflächen, die sich z.B. durch Wärmedehnungen während einer Bremsung verändern kann, vom Werkstoff des Rades bzw. der Bremsscheibe, vom Werkstoff des Bremsklotzes bzw. des Bremsbelages, von der Umgebungstemperatur, der Kühlung, der Luftfeuchtigkeit und der Bremsenergie. Unter Berücksichtigung dieser Einflussgrößen ist es möglich, den Krafteinleitungspunkt so zu wählen, dass die Tendenz zum Schrägverschleiß reduziert wird. Gemäß der EP 551 868 A1 wird vorgeschlagen, den Krafteinleitungspunkt eines nierenförmigen Scheiben-Bremsbelages nicht in der Ebene des Flächenschwerpunkts der Reibfläche zu platzieren, sondern radial etwas in Richtung der Bremsscheibenachse verschoben, um dort, wo die Umfangsgeschwindigkeit der Reibfläche geringer ist, eine höhere Belagpressung zu erzeugen und damit einen gleichmäßigen Belagverschleiß zu erhalten.

Weiterhin existieren zur Ermittlung eines optimalen Krafteinleitungspunktes Berechnungsprogramme. Eine Überprüfung des Resultates bzw. eine Optimierung ist durch Versuche am Reibungsprüfstand oder durch Fahrversuche möglich.

Aufgrund der Tatsache, dass die optimale Lage des Krafteinleitungspunktes von der Fahrgeschwindigkeit des Fahrzeugs abhängt, ist es aber nicht möglich, einen für alle Einsatzfälle optimalen Druckpunkt zu finden. Das bedeutet, der gleiche Belag hat in einem schnellen Fahrzeug die Tendenz zum Schrägverschleiß in der einen Richtung und in einem langsamen Fahrzeug die Tendenz zum Schrägverschleiß in der anderen Richtung.

Eine gattungsgemäße Schienenfahrzeugbremsvorrichtung als Klotzbremsvorrichtung ist in der US 6,241,058 B1 offenbart. Bei dieser verjüngt sich ein in einer Ebene senkrecht zur Achse, gegenüber welcher der Bremsklotz kippbar gelagert ist, angeordneter Querschnitt des Verschleißvolumens des Bremsklotzes zum Rad hin. Durch eine solche Ausgestaltung verschiebt sich infolge der Schrägstellung der Verschleißmittelpunkt der Reibfläche in die entgegen gesetzte Richtung. So entsteht ein stabilisierendes Drehmoment, das den schräg stehenden Bremsbelag wieder aufrichtet.

Der Erfindung liegt die Aufgabe zugrunde, eine Schienenfahrzeugbremsvorrichtung der oben erwähnten Art derart weiter zu bilden, dass Schrägverschleiß von Bremsbelägen weiter reduziert und dadurch das zur Verfügung stehende Verschleißvolumen noch besser genutzt wird.

Erfindungsgemäß wird diese Aufgabe durch die Merkmale von Patentanspruch 1 gelöst.

### Vorteile der Erfindung

Die Erfindung basiert auf dem Gedanken, die geometrische Form von Bremsbelägen so zu gestalten, dass bei in jeder Richtung auftretendem Schrägverschleiß sich der Verschleißmittelpunkt am Bremsbelag so verschiebt, dass ein dem Schrägverschleiß entgegenwirkendes Drehmoment entsteht.

Dabei umfasst der Bremsbelag beispielsweise ein im Bremsbelaghalter gehaltenes Haltevolumen und einen mit dem Verschleißpartner wie beispielsweise einer Bremsscheibe oder einer Radlauffläche zusammenwirkendes Verschleißvolumen.

Erfindungsgemäß ist wenigstens ein polygonförmiger Bremsbelag gegenüber dem Bremsbelaghalter allseitig kippbar ausgeführt und der Querschnitt des Verschleißvolumens des Bremsbelags verjüngt sich in jeder Ebene senkrecht zum Reibpartner gesehen zum Reibpartner hin.

Denn aufgrund der dann allseits schiffsrumpfartig geneigten Seitenflächen der Bremsbeläge verschiebt sich infolge der Schrägstellung der Verschleißmittelpunkt der Reibfläche in die entgegen gesetzte Richtung. So entsteht ein stabilisierendes Drehmoment, das den schräg stehenden Bremsbelag wieder aufrichtet, ähnlich wie bei einem krängenden Schiff.

In der DD-PS 87 058 sind zwar Bremsbeläge mit konischem Querschnitt offenbart, jedoch ist diese Form einzig zu dem Zweck gewählt worden, dass der Bremsbelag bei einem verschleißbedingten Bremsbelagwechsel auf einfache Weise in eine Schwalbenschwanzführung eines Bremsbelaghalters eingeführt werden kann, ohne dass er eine komplizierte, kostspielig herzustellende Außenkontur aufweist. Das gleiche gilt für die in der DE-OS 21 00 009 gezeigten Bremsbeläge.

Der Effekt der Selbststabilisierung wird auch erreicht, wenn gemäß einer Weiterbildung der Erfindung sich zumindest die in einer Ebene senkrecht zur Achse angeordneten Querschnitte von sich von einer zum Reibpartner gewandten Reibfläche in das Verschleißvolumen des Bremsbelags hinein erstreckenden Ausnehmungen zum Reibpartner hin erweitern.

### Zeichnungen

Ausführungsbeispiele der Erfindung sind in der Zeichnung dargestellt und in der nachfolgenden Beschreibung näher erläutert. In der Zeichnung zeigt:
- Fig.1: eine perspektivische Darstellung einer mit einer Bremsscheibe zusammenwirkenden Bremszange gemäß dem Stand der Technik;
- Fig.2: eine Querschnittsdarstellung eines Bremsbelaghalters und eines Bremsbelags der Bremszange von Fig.1;
- Fig.3: eine perspektivische Darstellung einer mit einer Bremsscheibe zusammenwirkenden Bremszange des Stands der Technik gemäß einer weiteren Ausführung;
- Fig.4: eine perspektivische Darstellung einer Klotzbremsvorrichtung des Stands der Technik;
- Fig.5: eine Querschnittsdarstellung eines Bremsbelaghalters und eines Bremsbelags in unverschlissenem Zustand;
- Fig.6: eine Querschnittsdarstellung des Bremsbelaghalters und des Bremsbelags von Fig.5 in verschlissenem Zustand;
- Fig.7: eine Querschnittsdarstellung eines Bremsbelaghalters und von Bremsbelägen gemäß einer bevorzugten Ausführungsform der Erfindung in unverschlissenem Zustand;
- Fig.8: eine Querschnittsdarstellung des Bremsbelaghalters und der Bremsbeläge von Fig.7 in verschlissenem Zustand;
- Fig.9: eine Querschnittsdarstellung eines Bremsklotzhalters und eines Bremsklotzes in unverschlissenem Zustand;
- Fig.10: eine Querschnittsdarstellung des Bremsklotzhalters und des Bremsklotzes von Fig.9 in verschlissenem Zustand;

### Beschreibung der Ausführungsbeispiele

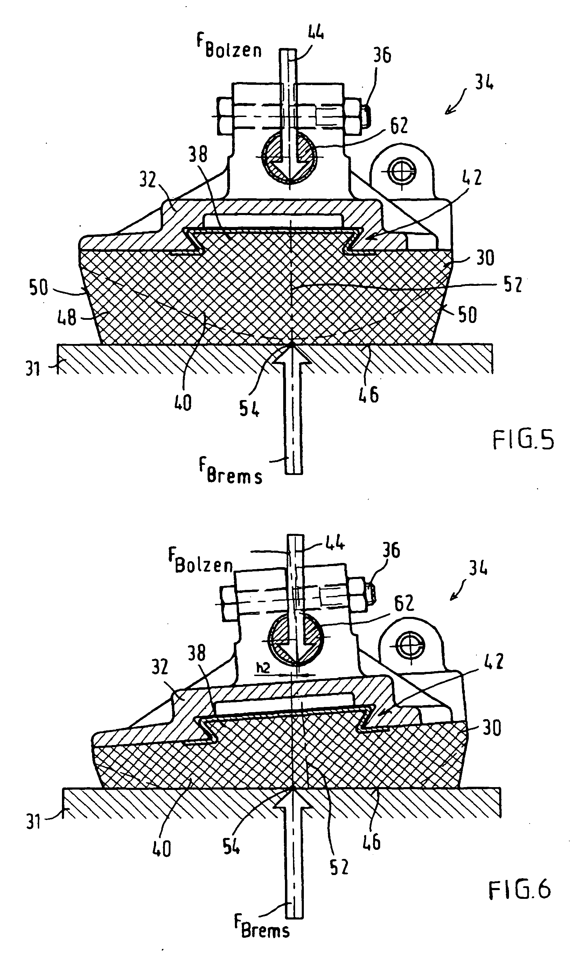

Der in Fig.5 gezeigte, einen Bremsbelag 30 tragende Bremsbelaghalter 32 wird bevorzugt in einer Kompaktbremszange 34 verwendet, wie sie in Fig.1 jedoch noch mit Bremsbelägen 8 des Stands der Technik dargestellt ist. Die Kompaktbremszange 34 wirkt auf eine Bremsscheibe 31, indem die Bremsbeläge 30 in beidseitigen Reibkontakt mit Seitenflächen der Bremsscheibe 31 treten. Die Bremsbelaghalter 32 sind an Bremszangenhebein der Kompaktbremszange 34 mittels je zweier Bolzenverbindungen 62 und Klemmschrauben 36 befestigt. Diese Bolzenverbindungen 62 erlauben ein Verschwenken der Bremsbelaghalter 32 um die Bolzenachsen, welche parallel zur Bremsscheibenebene angeordnet sind. Dies ist notwendig, damit die Bremsbeläge 30 weiterhin parallel zu den Seitenflächen der Bremsscheibe 31 ausgerichtet sein können, wenn diese zusammen mit der Radachse, mit welcher sie mitdreht, Axialbewegungen ausführt.

Wie aus Fig.5 hervorgeht, weisen die Bremsbeläge 30 ein im jeweiligen Bremsbelaghalter 32 gehaltenes Haltevolumen 38 und ein mit der Bremsscheibe 31 zusammenwirkendes Verschleißvolumen 40 auf, welches bis zu einer Verschleißgrenze verschlissen werden kann. Die Verbindung zwischen dem Haltevolumen 38 der Bremsbeläge 30 und dem Bremsbelaghalter 32 kann beispielsweise durch eine Schwalbenschwanzführung 42 realisiert sein.

In Fig.5 ist auch die Kraftwirklinie 44 der Bolzenkraft F_{Bolzen} dargestellt, wie sie in unverschlissenem Zustand des Bremsbelags 30 noch kollinear mit dem Verschleißmittelpunkt 54 ist, an welchem die Bremskraft F_{Brems} an einer Reibfläche 46 des Bremsbelags 30 angreift. In gestrichelter Linie sind im Verschleißvolumen 40 vorhandene Querschlitze 48 dargestellt, die zum einen dazu dienen, Wasser auf der Reibfläche nach außen abzuleiten, damit sich bei feuchter Umgebung kein hydrodynamischen Schmierfilm auf der Reibfläche 46 ausbildet und den Gleitreibwert unerwünscht reduziert wird. Weiterhin verhindern diese Querschlitze 48 eine Aufbiegung des Bremsbelags 30, wenn sich dieser entlang seiner Dicke ungleichmäßig erwärmt und es dadurch zu ungleichmäßigen Wärmeausdehnungen kommt.

Wie zu sehen, verjüngt sich ein in einer Ebene senkrecht zur Achse der Bolzenverbindung 62 angeordneter Querschnitt des Verschleißvolumens 40 des Bremsbelags 30 zur Bremsscheibe 31 hin. Vorzugsweise verläuft diese Querschnittverjüngung glatt und stetig, d.h. die Seitenflächen 50 des Bremsbelags 30 sind eben und im unverschlissenen Zustand gemäß Fig.5 gegenüber einer Mittellinie 52 des Bremsbelags 30 zur Bremsscheibe 31 hin konvergierend schräg angeordnet.

Diese geometrische Ausgestaltung bewirkt, dass sich bei auftretendem Schrägverschleiß des Bremsbelags 30 der Verschleißmittelpunkt 54 des Bremsbelags 30, an dem die Bremskraft F_{Brems} fiktiv angreift, gegenüber der Kraftwirklinie 44 der Bolzenkraft F_{Bolzen} um einen Weg h₂ so verschiebt, dass ein dem Schrägverschleiß entgegenwirkendes Drehmoment entsteht, welches den Bremsbelag 30 in eine Richtung vorspannt, in welcher der vom Verschleiß weniger betroffene, hier in Fig.6 rechte Abschnitt des Verschleißvolumens 40 des Bremsbelags 30 höher belastet wird. Auf diese Weise wird der Schrägverschleiß reduziert und eine gleichmäßigere Abnutzung des Bremsbelags 30 erzielt.

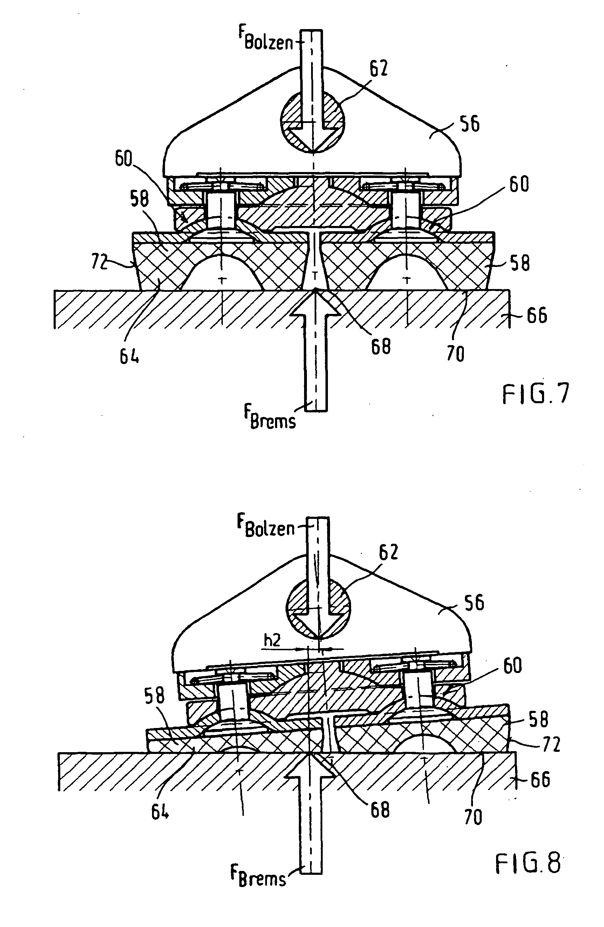

Fig.7 und Fig.8 zeigen eine erfindungsgemäße Ausführungsform eines Bremsbelaghalters 56, an welchem mehrere, beispielsweise sechseckige Bremsbeläge 58 aus Sintermaterial beispielsweise durch Kugelkalotten 60 allseitig schwenkbar gelagert sind. Der Bremsbelaghalter 56 ist wiederum durch eine Bolzenverbindung 62 gegenüber einem Bremszangenhebel einer Bremszange gelagert. Der grundlegende Aufbau entspricht der Ausführung von Fig.3 mit Ausnahme der Ausgestaltung der Querschnitte der sechseckigen Bremsbeläge 58. Aufgrund der allseitig schwenkbaren Lagerung der sechseckigen Bremsbeläge 58 kann Schrägverschleiß nicht nur in einer Querschnittsebene senkrecht zur Achse der Bolzenverbindung 62 sondern in jeder Richtung auftreten. Deshalb muss sich hier der Querschnitt des Verschleißvolumens 64 der Bremsbeläge 58 in jeder Ebene senkrecht zur Bremsscheibe 66 gesehen zur Bremsscheibe 66 hin verjüngen.

Wie beim vorangehend beschriebenen Ausführungsbeispiel bewirkt diese geometrische Ausgestaltung der Bremsbeläge 58, dass sich bei auftretendem Schrägverschleiß der Verschleißmittelpunkt 68 an der Reibfläche 70 um einen Weg h₂ so verschiebt, dass ein dem Schrägverschleiß entgegenwirkendes Drehmoment entsteht, welches die Bremsbeläge 58 in eine Richtung vorspannt, in welcher der vom Verschleiß weniger betroffene Abschnitt des Verschleißvolumens 64 höher belastet wird, wie aus Fig.8 hervorgeht. Wegen der allseitigen Schrägung der Seitenflächen 72 der Bremsbeläge 58 ist dieser Effekt nicht auf die in Fig.7 und Fig.8 gezeigte Querschnittsebene senkrecht zur Bolzenachse der Bolzenverbindung 62 beschränkt, sondern in allen Querschnittsebenen senkrecht zur Bremsfläche der Bremsscheibe 66 möglich.

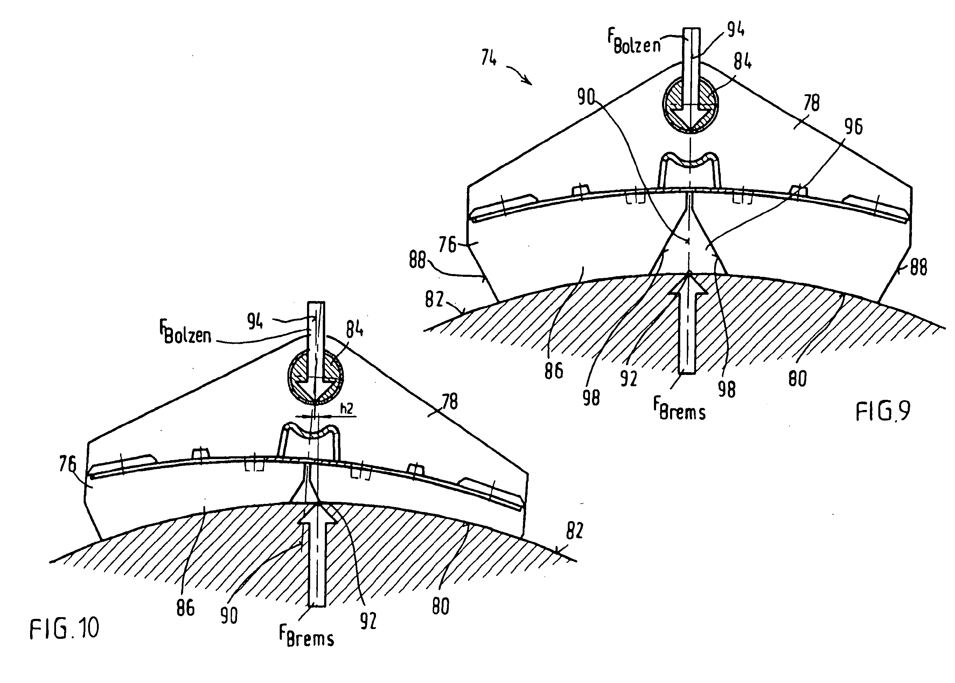

Der Erfindungsgedanke, die geometrische Form des Bremsbelages so zu gestalten, dass sich bei auftretendem Schrägverschleiß der Verschleißmittelpunkt der Reibfläche so verschiebt, dass ein dem Schrägverschleiß entgegenwirkendes Drehmoment entsteht, lässt sich auch auf Klotzbremsen 74 anwenden. Bei der Ausführungsform von Fig.9 und Fig.10 handelt es sich um einen Bremsklotz 76 tragenden Bremsklotzhalter 78, wobei die Reibfläche 80 des Bremsklotzes 76 entsprechend einer eine Bremsreibfläche 82 bildenden Lauffläche eines abzubremsenden Rades einen kreisförmigen Querschnitt aufweist. Auch hier ist der Bremsklotzhalter 78 über eine Bolzenverbindung 84 wie in Fig.4 gezeigt schwenkbar befestigt.

Auch bei dieser Ausführungsform verjüngt sich ein in einer Ebene senkrecht zur Achse der Bolzenverbindung 84 angeordneter Querschnitt des Verschleißvolumens 86 des Bremsklotzes 76 zur Bremsreibfläche 82 des Rades hin. Vorzugsweise verläuft diese Querschnittverjüngung ebenfalls glatt und stetig, d.h. die Seitenflächen 88 des Bremsklotzes 76 sind eben und im unverschlissenen Zustand gemäß Fig.9 gegenüber einer Mittellinie 90 des Bremsklotzes 76 konvergierend schräg angeordnet.

Wie bei den vorangehend beschriebenen Ausführungsbeispielen bewirkt die geometrische Ausgestaltung des Bremsklotzes 76, dass sich bei auftretendem Schrägverschleiß der Verschleißmittelpunkt 92 an der Reibfläche 80 gegenüber der Kraftwirklinie 94 der Bolzenkraft F_{Bolzen} um einen Weg h₂ so verschiebt, dass ein dem Schrägverschleiß entgegenwirkendes Drehmoment entsteht, welches den Bremsklotz 76 in eine Richtung vorspannt, in welcher der vom Verschleiß weniger betroffene, in Fig.10 linke Abschnitt des Verschleißvolumens 86 höher belastet wird.

Weiterhin weisen die Schlitze 96 im Bremsklotz 76 nicht wie beim Stand der Technik gemäß Fig.4 einen gleichmäßig rechtwinkeligen Querschnitt auf, sondern dieser Querschnitt erweitert sich zumindest teilweise zur Lauffläche 82 des Rades hin. Wie bei den Seitenflächen 88 des Bremsklotzes 76 ist diese Querschnittserweiterung bevorzugt auf die Querschnittsebene senkrecht zur Achse der Bolzenverbindung 84 beschränkt. Da die die Schlitze 96 begrenzenden inneren Flächen 98 des Bremsklotzes 76 gewissermaßen auch Seitenflächen des Bremsklotzes darstellen, bewirkt diese Ausgestaltung den gleichen Schrägverschleiß ausgleichenden Effekt, der die Schrägung der äußeren Seitenflächen 88 des Bremsklotzes 76 hervorruft.

### Bezugszahlenliste

- 1: Bremsbelaghalter
- 2: Bolzenverbindung
- 4: Bremszangenhebel
- 6: Kompaktbremszange
- 8: Bremsbelag
- 10: Verschleißmittelpunkt
- 12: Kraftwirklinie
- 14: Bolzenverbindung
- 16: Bremsbelaghalter
- 18: Kompaktbremszange
- 19: Schlitze
- 20: Bremsbeläge
- 22: Klotzbremse
- 24: Bremsklotzhalter
- 26: Bremshebel
- 28: Bolzenverbindung
- 30: Bremsbelag
- 31: Bremsscheibe
- 32: Bremsbelaghalter
- 34: Kompaktbremszange
- 36: Klemmschraube
- 38: Haltevolumen
- 40: Verschleißvolumen
- 42: Schwalbenschwanzführung
- 44: Kraftwirklinie
- 46: Reibfläche
- 48: Querschlitze
- 50: Seitenflächen
- 52: Mittellinie
- 54: Verschleißmittelpunkt
- 56: Bremsbelaghalter
- 58: Bremsbeläge
- 60: Kugelkalotten
- 62: Bolzenverbindung
- 64: Verschleißvolumen
- 66: Bremsscheibe
- 68: Verschleißmittelpunkt
- 70: Reibfläche
- 72: Seitenflächen
- 74: Klotzbremse
- 76: Bremsklotz
- 78: Bremsklotzhalter
- 80: Reibfläche
- 82: Bremsreibfläche
- 84: Bolzenverbindung
- 86: Verschleißvolumen
- 88: Seitenflächen
- 90: Mittellinie
- 92: Verschleißmittelpunkt
- 94: Kraftwirklinie
- 96: Schlitze
- 98: Seitenflächen

## Patentansprüche

1. Schienenfahrzeugbremsvorrichtung mit wenigstens einem um eine Achse (62) kippbar gelagerten, wenigstens einen Bremsbelag (58) tragenden Bremsbelaghalter (56), wobei der Bremsbelag (58) ein mit dem Reibpartner (66) zusammenwirkendes Verschleißvolumen (64) umfasst und die geometrische Form des Bremsbelags (58) derart gestaltet ist, dass sich bei auftretendem Schrägverschleiß der Verschleißmittelpunkt (68) am Bremsbelag (58) so verschiebt, dass ein dem Schrägverschleiß entgegenwirkendes Drehmoment entsteht, **dadurch gekennzeichnet, dass** wenigstens ein Bremsbelag (58) polygonförmig und gegenüber dem Bremsbelaghalter (56) allseitig kippbar ausgeführt ist und sich der Querschnitt des Verschleißvolumens (64) des Bremsbelags (58) in jeder Ebene senkrecht zum Reibpartner (66) gesehen zum Reibpartner (66) hin verjüngt.

2. Schienenfahrzeugbremsvorrichtung nach Anspruch 1, **dadurch gekennzeichnet, dass** sich zumindest in einer Ebene senkrecht zur Achse (62) angeordnete Querschnitte von sich von einer zum Reibpartner (66) gewandten Reibfläche (70) in das Verschleißvolumen (64) des Bremsbelags (58) hinein erstreckenden Ausnehmungen zum Reibpartner (66) hin erweitern.

3. Schienenfahrzeugbremsvorrichtung nach wenigstens einem der vorhergehenden Ansprüche, **dadurch gekennzeichnet, dass** die Querschnittverjüngungen und/oder die Querschnitterweiterungen glatt stetig verlaufen.

4. Schienenfahrzeugbremsvorrichtung nach wenigstens einem der vorhergehenden Ansprüche, **dadurch gekennzeichnet, dass** sie eine Klotzbremsvorrichtung oder eine Scheibenbremsvorrichtung ist.

## Claims

1. Brake system for rail vehicles, comprising a brake lining support (56) supported for tilting about an axis (62) and supporting at least one brake lining (58), with said brake lining (58) including a wear volume (64) interacting with the friction partner (66) and with the geometric shape of said brake lining (58) being so configured that in the case of occurring oblique wear the centre of wear (68) on said brake lining (58) undergoes such a displacement that a torque opposing said oblique wear will be created, **characterised in that** at least one brake lining (58) presents a polygon configuration for tilting on all sides relative to said brake lining support (56) and that the cross-section of said wear volume (64) of said brake lining (58) tapers towards said friction partner (66) when seen in each plane in a direction orthogonal on said friction partner (66).

2. Brake system for rail vehicles according to Claim 1, ch aracterised in that cross-sections disposed at least in a plane orthogonal on said axis (62) flare from a friction surface (70) facing said friction partner (66) into recesses, which extend into said wear volume (64) of said brake lining, towards said friction partner (66).

3. Brake system for rail vehicles according to at least one of the preceding Claims, **characterised in that** said reductions of the cross-section and/or said extensions of the cross-.section extend smoothly and continuously.

4. Brake system for rail vehicles according to at least one of the preceding Claims, **characterised in that** it is a shoe brake device or a disc brake device.

## Revendications

1. Dispositif de freinage de véhicule ferroviaire, comprenant au moins un porte-garniture (56) de frein monté basculant autour d'un axe (62) et portant au moins une garniture (58) de frein, la garniture (58) de frein comprenant un volume (64) d'usure coopérant avec le partenaire (66) de frottement et la forme géométrique de la garniture (58) de frein étant telle que, lorsqu'il se produit une usure inclinée du centre (68) d'usure sur la garniture (58) de frein, elle se décale de façon à créer un couple de rotation s'opposant à l'usure inclinée, **caractérisé en ce qu'**au moins une garniture (58) de frein est réalisée en forme de polygone et pouvant basculer de tous côtés par rapport au porte-garniture (56) de frein et la section transversale du volume (64) d'usure de la garniture (58) de frein se rétrécit en direction du partenaire (66) de frottement dans chaque plan perpendiculairement au partenaire (66) de frottement.

2. Dispositif de freinage de véhicule ferroviaire suivant la revendication 1, **caractérisé en ce que** des sections transversales, disposées au moins dans un plan perpendiculairement à l'axe (62) d'évidements s'étendant d'une surface (70) de frottement, tournée vers le partenaire (66) de frottement, dans le volume (64) d'usure de la garniture (58) de frein s'élargissent vers le partenaire (66) de frottement.

3. Dispositif de freinage de véhicule ferroviaire suivant l'une des revendications précédentes, **caractérisé en ce que** les rétrécissements de sections transversales et/ou les élargissements de sections transversales sont constamment continus.

4. Dispositif de freinage de véhicule ferroviaire suivant l'une des revendications précédentes, **caractérisé en ce que** c'est un dispositif de frein à sabot ou un dispositif de frein à disque.
